# EUROPEAN PATENT APPLICATION

(11) **EP 3 547 094 A1**
(43) Date of publication of application: **02.10.2019**
(21) Application number: 19160943.7
(22) Date of filing: 06.03.2019
(51) Int. Cl.: G06F 3/044

(54) **TOUCH PANEL**

(30) Priority: 26.03.2018 JP 2018058910
(71) Applicant: VTS-Touchsensor Co., Ltd., Higashiomi-shi Shiga 527-0046 (JP)
(72) Inventor: Bani, Kanae, Taito-ku, Tokyo, 110-0016 (JP); Harada, Takahiro, Taito-ku, Tokyo, 110-0016 (JP); Shi, Bi, Taito-ku, Tokyo, 110-0016 (JP)
(74) Representative: Rau, Schneck & Hübner Patentanwälte Rechtsanwälte PartGmbB

(57) **Abstract**

The problem addressed by the present invention lies in providing a touch panel capable of suppressing the occurrence of moiré without causing graining to occur, and a display device onto which the touch panel has been stacked.

In order to solve this problem, a touch panel is provided with a first electrically conductive layer including a plurality of conductor wires, and a second electrically conductive layer including a plurality of conductor wires, wherein: in a plan view in a state in which the first electrically conductive layer and the second electrically conductive layer are stacked on one another, a pattern of continuously arranged virtual quadrilaterals VS, which are virtual quadrilaterals having the same shape, formed by the first conductor wires and the second conductor wires, is defined as a reference pattern; in the first electrically conductive layer and the second electrically conductive layer respectively, parts where the conductor wires intersect constitute less than 10% of virtual vertices VP, which are the parts corresponding to all virtual vertices of the virtual quadrilaterals VS; and in a plan view, each actual vertex CP, which is a vertex formed by the two conductor wires, is disposed in a position displaced by an amount of displacement at least equal to 1% and less than 50% of the length of a pitch WP, which is the length of one side of the virtual quadrilateral VS, from the virtual vertex VP.

## Description

### Technical field

The present invention relates to a touch panel for stacking onto a display device, such as a touch panel with which a mobile communication terminal is provided, and a display device onto which the touch panel has been stacked.

### Background art

JP 2016-115159 (patent literature article 1) discloses an example of a technique for forming a pattern using thin wires made of metal (thin metal wires) on a touch panel with which a display device is provided.

In the technique in patent literature article 1, light transmissive sensor units extending in a first direction, and light transmissive dummy portions aligned alternately with the sensor portions in a second direction, which is a direction perpendicular to the first direction, are provided on a light transmissive supporting body. Furthermore, the sensor portions are disposed with a period L in the second direction, the sensor portions and the dummy portions are configured from mesh-like thin metal wire patterns, and at least part of the thin metal wire pattern within the sensor portions has a period of 2L/N (where N is an arbitrarily defined natural number) in the second direction. In addition, the thin metal wire pattern of the dummy portions has a period greater than 2L/N in the second direction.

### Summary of invention

### Problems to be resolved by the invention

The technique disclosed in JP 2016-115159 has a problem in that it is difficult to suppress moiré if the amount of displacement through which the positions of vertices at which the two thin metal wires intersect are shifted is too small. There is also a problem in that it is difficult to suppress the occurrence of graining if the amount of displacement through which the positions of the vertices are shifted is too large.

The present invention was devised in view of such problems, and the objective thereof is to provide a touch panel capable of suppressing the occurrence of moiré and graining, and a display device provided with the touch panel.

### Means of overcoming the problems

In order to resolve the abovementioned problems, one embodiment of the present invention provides a touch panel which is provided with a first electrically conductive layer including a plurality of conductor wires, and a second electrically conductive layer including a plurality of conductor wires, and which has the following characteristics. Further, in a plan view in a state in which the first electrically conductive layer and the second electrically conductive layer are stacked on one another, a pattern of continuously arranged virtual quadrilaterals, which are virtual quadrilaterals having the same shape, formed by the conductor wires included in the first electrically conductive layer and the conductor wires included in the second electrically conductive layer, is defined as a reference pattern. Further, in the first electrically conductive layer and the second electrically conductive layer respectively, parts where the conductor wires intersect constitute less than 10% of the parts corresponding to all the vertices of the virtual quadrilaterals in the reference pattern. In addition, in a plan view, each vertex formed by the two conductor wires is disposed in a position displaced by an amount of displacement at least equal to 1% and less than 50% of the length of a pitch, which is the length of one side of the virtual quadrilateral, from the part corresponding to the vertex of the virtual quadrilateral in the reference pattern.

Further, in order to resolve the abovementioned problems, one embodiment of the present invention provides a display device onto which a touch panel having the configuration discussed hereinabove has been stacked.

### Advantages of the invention

According to the present invention, the amount of displacement of the vertices formed by the two conductor wires from the parts corresponding to the vertices of the virtual quadrilaterals can be set to an appropriate value.

It is therefore possible to suppress the occurrence of moiré and graining in a touch panel provided with a first electrically conductive layer and a second electrically conductive layer including a plurality of conductor wires, and a display device onto which the touch panel has been stacked.

### Brief description of the drawings

- Figure 1: is a plan view illustrating a touch panel according to a first embodiment of the present invention.
- Figure 2: is an enlarged view of region II surrounded by the dashed line in Figure 1.
- Figure 3: is a cross-sectional view taken along the line III-III in Figure 2.
- Figure 4: is a drawing illustrating the concept of the reference pattern.
- Figure 5: is a drawing illustrating the concept of displacing an actual vertex from a virtual vertex.
- Figure 6: is an enlarged view illustrating the concept of displacing all actual vertices from virtual vertices in part of a detection region.
- Figure 7: is a plan view illustrating the first electrically conductive layer.
- Figure 8: is a plan view illustrating the second electrically conductive layer.
- Figure 9: is a drawing illustrating a configuration in which two conductor wires are connected by intersecting.
- Figure 10: is a drawing illustrating a configuration in which two conductor wires are connected in a trifurcate shape.

### Modes of embodying the invention

In the following detailed description, specific details are set forth in order to provide a thorough understanding of embodiments of the present invention. However, it is clear that one or more embodiments can be implemented even without said specific details. Further, in order to simplify the drawings, well known structures and devices may be represented schematically.

### First embodiment

A first embodiment of the present invention will now be described with reference to the drawings.

### Configuration

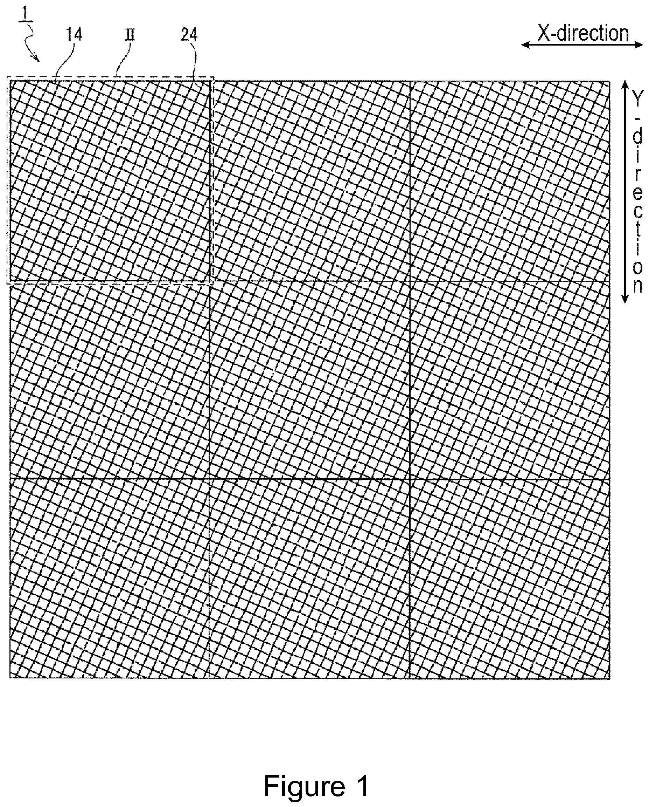

The configuration of a touch panel 1 will be described with reference to Figure 1 to Figure 8.

### Schematic configuration of touch panel 1

The touch panel 1 illustrated in Figure 1 to Figure 3 is provided, for example, in a car navigation system or the like.

Further, the touch panel 1 is a panel having a plurality of detection regions corresponding to a plurality of coordinates, forming an electrostatic capacitance type touch panel, for example.

Further, the touch panel 1 is a panel which is stacked on a display panel (display device) such as a liquid crystal panel, with an adhesive member interposed therebetween.

It should be noted that Figure 1 illustrates nine detection regions corresponding to nine coordinates (capacitance detection unit: node) (three rows × three columns) from among the detection regions of the touch panel 1, obtained by totalling together three coordinates arranged in the longitudinal direction and three coordinates arranged in the lateral direction.

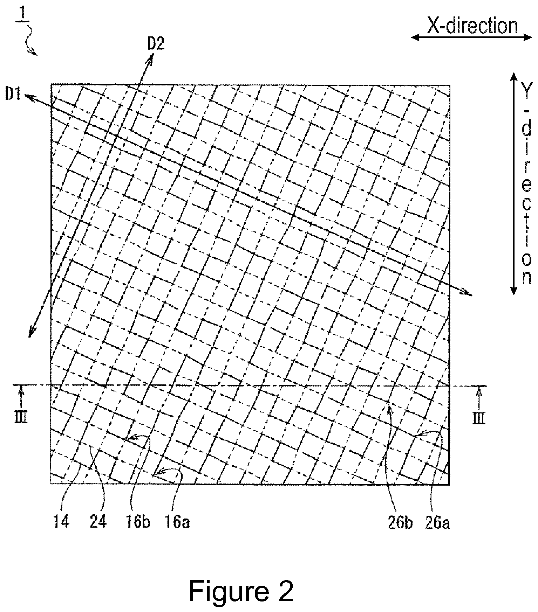

Further, Figure 2 illustrates only the one detection region disposed at the upper left in Figure 1, from among the nine detection regions of the touch panel 1. It should be noted that the length of one side of one detection region is set within a range of 4 [mm] or more and 5 [mm] or less.

Although not specifically shown in the drawings, a plurality of pixels provided in the display device onto which the touch panel 1 is stacked in two mutually orthogonal directions.

In the following description, the two directions in which the plurality of pixels are arranged are defined as an X-direction and a Y-direction. The X-direction is parallel to the longitudinal direction in which the three (three rows of) coordinates illustrated in Figure 1 are arranged. The Y-direction is a direction parallel to the lateral direction in which the three (three columns of) coordinates illustrated in Figure 1 are arranged.

It should be noted that the description in the first embodiment relates to a case in which the shape of the touch panel 1 is a shape (a laterally long shape) in which the length in the X-direction (lateral direction) is greater than the length in the Y-direction (longitudinal direction), by way of example.

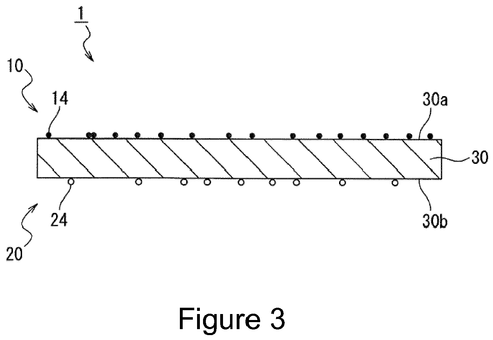

As illustrated in Figure 3, the touch panel 1 is provided with a first electrically conductive layer 10, a second electrically conductive layer 20, and a base material 30.

Figure 3 is an illustration pertaining to a configuration in which first conductor wires 14 are disposed on one surface 30a (the surface on the upper side in Figure 3) of the base material 30, and second conductor wires 24 are disposed on the other surface 30b (the surface on the lower side in Figure 3) of the base material 30.

The first conductor wires 14 disposed on said one surface 30a of the base material 30 form the first electrically conductive layer 10, which has a predetermined pattern.

It should be noted that, for the sake of explanation, in Figure 1 and Figure 2 the first conductor wires 14 are represented by solid lines, and in Figure 3 the first conductor wires 14 are represented by solid black circles. Further, in Figure 3, only the parts of the first conductor wires 14 that overlap the cross section taken along the line III-III are illustrated.

By way of example, the description in the first embodiment relates to a case in which the first electrically conductive layer 10 forms a sensing layer of the touch panel 1.

It should be noted that the detailed configuration of the first electrically conductive layer 10 is discussed hereinafter.

The second conductor wires 24 disposed on said other surface 30b of the base material 30 form the second electrically conductive layer 20, which has a predetermined pattern.

It should be noted that, for the sake of explanation, in Figure 1 the second conductor wires 24 are represented by solid lines, in Figure 2 the second conductor wires 24 are represented by dashed lines, and in Figure 3 the second conductor wires 24 are represented by hollow circles. Further, in Figure 3, only the parts of the second conductor wires 24 that overlap the cross section taken along the line III-III are illustrated.

By way of example, the description in the first embodiment relates to a case in which the second electrically conductive layer 20 forms a drive layer of the touch panel 1.

It should be noted that the detailed configuration of the second electrically conductive layer 20 is discussed hereinafter.

The base material 30 is formed using a transparent material such as glass or a resin film.

By means of the configuration discussed hereinabove, in the touch panel 1, lines of electric force generated by applying a voltage to the second electrically conductive layer 20 forming the drive layer exist between the second electrically conductive layer 20 and the first electrically conductive layer 10 forming the sensing layer, in the absence of contact by a conductor such as a fingertip.

Then, when a conductor such as a fingertip comes into contact, some of the lines of electric force are grounded by way of the conductor such as a finger. As a result, electrostatic capacitance between the second electrically conductive layer 20 and the first electrically conductive layer 10 decreases.

Thus, by the electrostatic capacitance changing, the position of contact of the conductor such as a finger on an operating surface of the touch panel 1 is detected.

As the detailed configuration of the touch panel 1, a description will now be given of the vertices formed by the two conductor wires in a plan view in a state in which the first electrically conductive layer 10 and the second electrically conductive layer 20 are stacked on one another. It should be noted that the viewpoint in the plan view discussed hereinabove is in the direction in which the first electrically conductive layer 10 and the second electrically conductive layer 20 are stacked.

Here, "two conductor wires" refers to any combination of a first conductor wire 14 and a second conductor wire 24, two first conductor wires 14, or two second conductor wires 24.

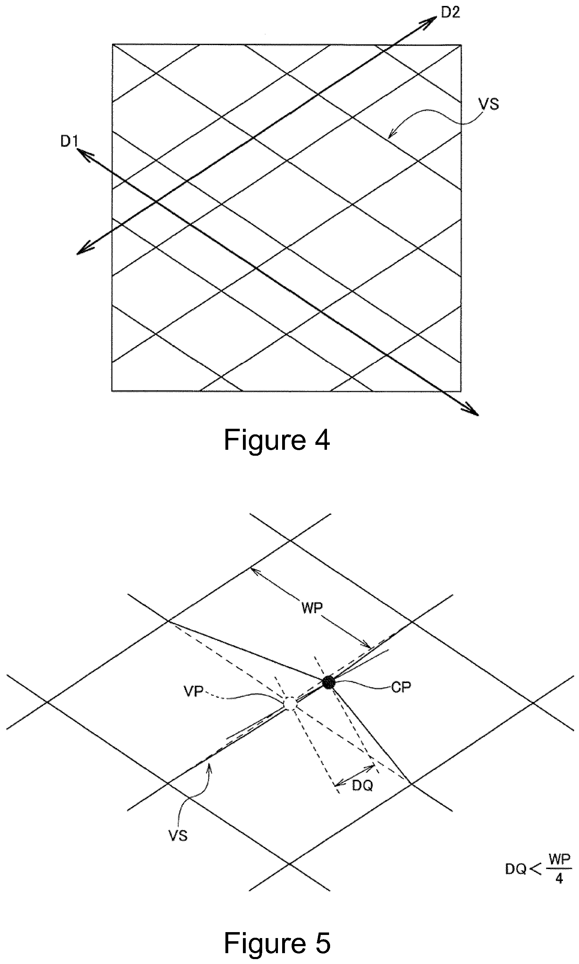

First, as illustrated in Figure 4, a pattern in which virtual quadrilaterals VS are disposed continuously, in a plan view, is defined as a reference pattern.

The virtual quadrilaterals VS are virtual quadrilaterals which have the shame shape and are formed by the first conductor wires 14 and the second conductor wires 24. It should be noted that, although Figure 4 illustrates by way of example a pattern in which the virtual quadrilaterals VS are rhombic, the shape of the virtual quadrilaterals VS may be that of a quadrilateral other than a rhombus, such as a square or a parallelogram.

Further, the virtual quadrilaterals VS are arranged in a first direction D1 and a second direction D2 intersecting the first direction D1.

Then, as illustrated in Figure 5, each vertex formed by two conductor wires is disposed in a position displaced from the part corresponding to the vertex of the virtual quadrilateral VS, in a plan view, by an amount of displacement at least equal to 1% and less than 50% of the length (100%) of a pitch WP (wire pitch). It should be noted that in Figure 5 the sides forming the virtual quadrilaterals VS are represented by dashed lines, for the sake of explanation. Similarly, in Figure 5 the conductor wires are represented by solid lines, for the sake of explanation.

By way of example, the description in the first embodiment relates to a case in which each vertex formed by two wires is disposed in a position displaced from the part corresponding to the vertex of the virtual quadrilateral VS, in a plan view, by an amount of displacement (DQ<WP/4) at least equal to 2% and less than 25% of the length of the pitch WP.

It should be noted that in the drawings and the following description, the vertices formed by the two conductor wires are in some cases described as "actual vertices CP". Similarly, in the drawings and the following description, the vertices representing the parts corresponding to the vertices of the virtual quadrilaterals VS are in some cases described as "virtual vertices VP". Further, in the drawings and the following description, the amount of displacement through which the actual vertices CP are displaced from the virtual vertices VP is in some cases described as "amount of displacement DQ". Furthermore, in the following description, the amount of displacement through which the actual vertices CP are displaced from the virtual vertices VP is in some cases described as the "amount of displacement of the actual vertex".

It should be noted that the directions in which the actual vertices CP are displaced from the virtual vertices VP is irregular (random).

The pitch WP is the length of one side of the virtual quadrilateral VS. It should be noted that if all the sides of the virtual quadrilaterals VS have the same length, the pitch WP is the length of any side forming the virtual quadrilaterals VS, but if the virtual quadrilaterals VS are formed from sides having different lengths, the pitch WP is the length of any selected side forming the virtual quadrilaterals VS.

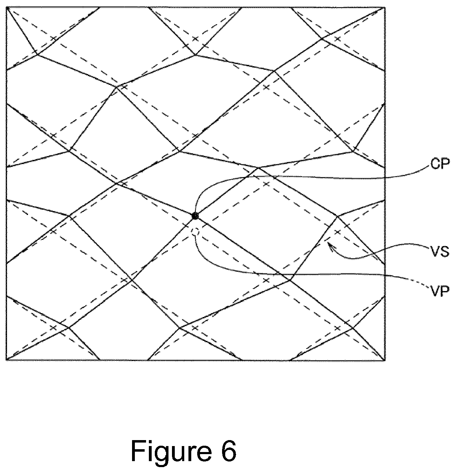

Further, as illustrated in Figure 6, a predetermined number of the actual vertices CP from among all the actual vertices CP existing in the detection region are disposed in positions displaced from the virtual vertices VP. It should be noted that in Figure 6, for the sake of explanation, only one virtual vertex VP and one actual vertex CP displaced from the virtual vertex VP are denoted with reference codes. It should be noted that in Figure 6, in the same way as in Figure 5, the sides forming the virtual quadrilaterals VS are represented by dashed lines, for the sake of explanation. Similarly, in Figure 6 the conductor wires are represented by solid lines, for the sake of explanation.

By way of example, the description in the first embodiment relates to a case in which the number of actual vertices CP disposed in positions displaced from the virtual vertices VP is set to the same number as all the actual vertices CP existing in the detection region. That is, the description relates to a case in which all the actual vertices CP existing in the detection region are disposed in positions displaced from the virtual vertices VP. It should be noted that Figure 6 illustrates a portion of the detection region, but in the detection region not illustrated, all the actual vertices CP existing in the detection region are disposed in positions displaced from the virtual vertices VP, in the same way as in the area illustrated in Figure 6.

Further, as illustrated in Figure 1, all the actual vertices CP existing in each detection region are disposed in the same position in all the detection regions. More specifically, the pattern formed in one unit region is formed in such a way as to be repeated in all the detection regions provided in the touch panel 1.

That is, in all the detection regions, the positions to which the vertices (actual vertices CP) formed by the two conductor wires are displaced from the parts (virtual vertices VP) corresponding to the vertices of the virtual quadrilaterals are the same.

It should be noted that, as illustrated in Figure 4, all four lines forming the virtual quadrilaterals VS in the reference pattern have the same length in a plan view.

That is, in a state prior to displacement of the actual vertices CP from the virtual vertices VP, all four lines forming the virtual quadrilaterals VS have the same length in a plan view.

Further, in the reference pattern, each first conductor wire 14 is arranged in either the first direction D1 or the second direction D2. The plurality of first conductor wires 14 arranged in the first direction D1 are arranged parallel to one another. The plurality of first conductor wires 14 arranged in the second direction D2 are arranged parallel to one another.

Similarly, in the reference pattern, each second conductor wire 24 is arranged in either the first direction D1 or the second direction D2, in the same way as the first conductor wires 14. The plurality of second conductor wires 24 arranged in the first direction D1 are arranged parallel to one another. The plurality of second conductor wires 24 arranged in the second direction D2 are arranged parallel to one another.

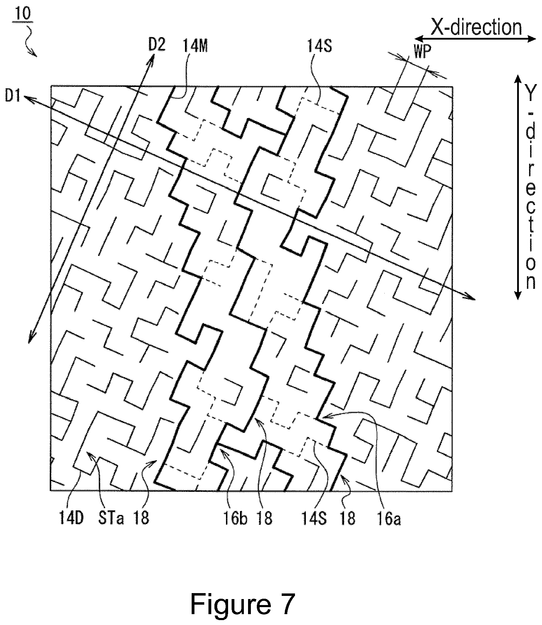

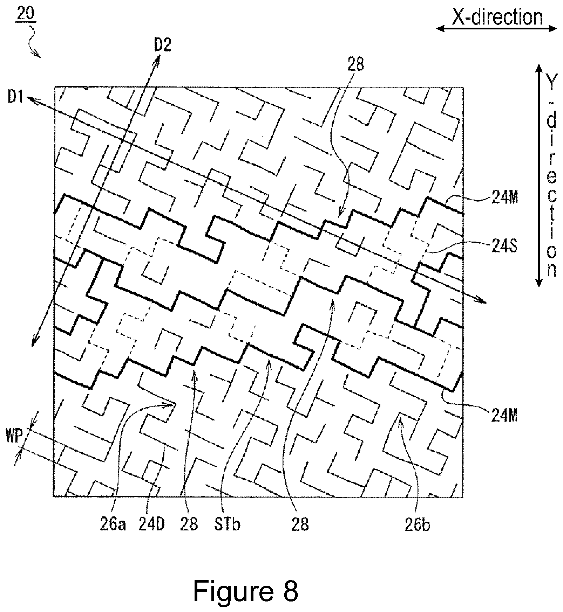

Configurations of the first electrically conductive layer 10 and the second electrically conductive layer 20
The detailed configurations of the first electrically conductive layer 10 and the second electrically conductive layer 20 will be described using Figure 7 and Figure 8, with reference to Figure 1 to Figure 6.

The first conductor wires 14 and the second conductor wires 24 are metal wires formed using gold (Au), silver (Ag), copper (Cu) or the like.

By way of example, the description in the first mode of embodiment relates to a case in which the first conductor wires 14 and the second conductor wires 24 are formed using copper.

The line width (thickness) of the first conductor wires 14 is set, for example, to 30 [µm] or less. The same applies to the line width (thickness) of the second conductor wires 24.

By way of example, the description in the first embodiment relates to a case in which the line width of the first conductor wires 14 is set within a range of 1 [µm] or more and 7 [µm] or less. The same applies to the line width of the second conductor wires 24.

At linking points of the first conductor wires 14 and linking points of the second conductor wires 24, two first conductor wires 14 are linked in any of a cross-shaped intersecting shape, a linear shape, a "trifurcate" shape, or an "L" shape, in a plan view.

That is, the first conductor wires 14 extending in the second direction D2 are linked to at least one first conductor wire 14 extending in the first direction D1. Also, the second conductor wires 24 extending in the second direction D2 are linked to at least one second conductor wire 24 extending in the first direction D1.

It should be noted that a "trifurcate shape" is a shape in which the angles at two locations formed by the two linked first conductor wires 14 and the angles at two locations formed by the two linked second conductor wires 24 are an acute angle and an obtuse angle. Further, an "L shape" is a shape in which the angle at one location formed by the two linked first conductor wires 14 and the angle at one location formed by the two linked second conductor wires 24 are a right angle, an acute angle or an obtuse angle.

Further, in the first electrically conductive layer 10 and the second electrically conductive layer 20 respectively, the parts where the conductor wires intersect (intersect in a cross shape) constitute less than 10% of the parts corresponding to all the vertices of the virtual quadrilaterals VS in the reference pattern.

By way of example, the description in the first embodiment relates to a case in which the intersecting parts of the conductor wires are formed to a minimum in each of the first electrically conductive layer 10 and the second electrically conductive layer 20.

The lengths of the straight-line parts of the first conductor wires 14 and the lengths of the straight-line parts of the second conductor wires 24 are set to be not less than one time and not more than 10 times the pitch WP.

By way of example, the description in the first embodiment relates to a case in which the lengths of the straight-line parts of the first conductor wires 14 and the lengths of the straight-line parts of the second conductor wires 24 are set to be not less than one time and not more than 4 times the pitch WP.

It should be noted that in Figure 7, one straight-line part set to a length of three times the pitch WP, from among the straight-line parts of the first conductor wires 14, is indicated by the reference code STa. Similarly, in Figure 8, one straight-line part set to a length of three times the pitch WP, from among the straight-line parts of the second conductor wires 24, is indicated by the reference code STb.

Further, the pitch WP is set within a range of not less than 100 [µm] and not more than 400 [µm], for example. The same applies in the second electrically conductive layer 20.

Further, in a plan view, a first acute angle portion 16a, which is an acute angle formed by the two linked first conductor wires 14, and a first obtuse angle portion 16b, which is an obtuse angle formed by the two linked first conductor wires 14, are formed at the linking points at which two first conductor wires 14 are linked. It should be noted that in Figure 7, only one first acute angle portion from among the plurality of first acute angle portions that are formed is indicated by the reference code 16a. Similarly, in Figure 7, only one first obtuse angle portion from among the plurality of first obtuse angle portions that are formed is indicated by the reference code 16b.

Furthermore, in a plan view, a second acute angle portion 26a, which is an acute angle formed by the two linked second conductor wires 24, and a second obtuse angle portion 26b, which is an obtuse angle formed by the two linked second conductor wires 24, are formed at the linking points at which two second conductor wires 24 are linked. It should be noted that in Figure 8, only one second acute angle portion from among the plurality of second acute angle portions that are formed is indicated by the reference code 26a. Similarly, in Figure 8, only one second obtuse angle portion from among the plurality of second obtuse angle portions that are formed is indicated by the reference code 26b.

In addition, the first conductor wires 14 are arranged irregularly (at random) in such a way that the first conductor wires 14 do not form a regular mesh (mesh pattern). Similarly, the second conductor wires 24 are arranged irregularly in such a way that the second conductor wires 24 do not form a regular mesh.

Here, a "regular mesh" is, for example, a state in which a plurality of conductor wires, in which straight lines having the same pitch WP extend alternately in the first direction D1 and the second direction D2, form a plurality of lines forming the same shape, and in addition a plurality of gap portions are formed surrounding said lines.

By this means, the pitch WP of the first conductor wires 14 and the direction in which the first conductor wires 14 extend (first direction D1 or second direction D2) are set in such a way that a quadrilateral surrounding one opening portion is not formed by only the first conductor wires 14. Similarly, the pitch WP of the second conductor wires 24 and the direction in which the second conductor wires 24 extend (first direction D1 or second direction D2) are set in such a way that a quadrilateral surrounding one opening portion is not formed by only the second conductor wires 24.

Therefore, in the positions linked in a "trifurcate shape" or an "L shape" at the linking points of the first conductor wires 14 and the linking points of the second conductor wires 24, the positions at which the angles formed by the two linked conductor wires are acute angles are also disposed irregularly (at random).

The plurality of first conductor wires 14 include a plurality of main electrode wires, a plurality of sub-electrode wires, and a plurality of dummy wires. Similarly, the plurality of second conductor wires 24 include a plurality of main electrode wires, a plurality of sub-electrode wires, and a plurality of dummy wires.

It should be noted that in Figure 7 and in the following description, the main electrode wires included in the first conductor wires 14 are represented by "first main electrode wires 14M", the sub-electrode wires included in the first conductor wires 14 are represented by "first sub-electrode wires 14S", and the dummy wires included in the first conductor wires 14 are represented by "first dummy wires 14D". Similarly, in Figure 8 and in the following description, the main electrode wires included in the second conductor wires 24 are represented by "second main electrode wires 24M", the sub-electrode wires included in the second conductor wires 24 are represented by "second sub-electrode wires 24S", and the dummy wires included in the second conductor wires 24 are represented by "second dummy wires 24D". Further, for the sake of explanation, in Figure 7 the first main electrode wires 14M are represented by solid lines, the first sub-electrode wires 14S are represented by dashed lines, and the first dummy wires 14D are represented by solid lines that are thinner than the first main electrode wires 14M. Similarly, for the sake of explanation, in Figure 8 the second main electrode wires 24M are represented by solid lines, the second sub-electrode wires 24S are represented by dashed lines, and the second dummy wires 24D are represented by solid lines that are thinner than the second main electrode wires 24M.

The first main electrode wires 14M, the first sub-electrode wires 14S, the second main electrode wires 24M, and the second sub-electrode wires 24S are connected to electrodes which are not shown in the drawings.

The plurality of first main electrode wires 14M included in the first conductor wires 14 form a plurality of first main electrode wire groups 18. Further, the plurality of second main electrode wires 24M included in the second conductor wires 24 form a plurality of second main electrode wire groups 28.

By way of example, the description in the first embodiment relates to a case in which, as illustrated in Figure 7, the plurality of the first main electrode wires 14M included in the first conductor wires 14 in one detection region form three first main electrode wire groups 18. Similarly, by way of example, the description in the first embodiment relates to a case in which, as illustrated in Figure 8, the plurality of the second main electrode wires 24M included in the second conductor wires 24 in one detection region form three second main electrode wire groups 28.

As illustrated in Figure 7, each of the three first main electrode wire groups 18 is a pattern which continues in a predetermined direction (the longitudinal direction in Figure 7) across one detection region. Further, as illustrated in Figure 8, each of the three second main electrode wire groups 28 is a pattern which continues in a predetermined direction (the lateral direction in Figure 8) across one detection region. Similarly, the direction in which the first main electrode wire groups 18 contained in the first electrically conductive layer 10 continue, and the direction in which the second main electrode wire groups 28 contained in the second electrically conductive layer 20 continue intersect one another.

Each first sub-electrode wire 14S links a plurality of different first main electrode wire groups 18 together. Further, each second sub-electrode wire 24S links a plurality of different second main electrode wire groups 28 together.

The linking point of the first sub-electrode wire 14S and the first main electrode wire group 18 is formed to connect an end portion of the first sub-electrode wire 14S between the two end portions of the first main electrode wire group 18. Similarly, the linking point of the second sub-electrode wire 24S and the second main electrode wire group 28 is formed to connect an end portion of the second sub-electrode wire 24S between the two end portions of the second main electrode wire group 28.

The first dummy wires 14D are not connected to either the first main electrode wires 14M or the first sub-electrode wires 14S, and are electrically insulated from the electrodes. Similarly, the second dummy wires 24D are not connected to either the second main electrode wires 24M or the second sub-electrode wires 24S, and are electrically insulated from the electrodes.

### Operation

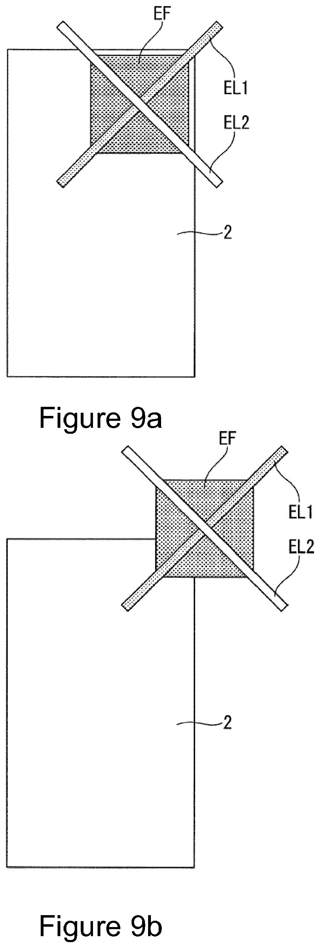

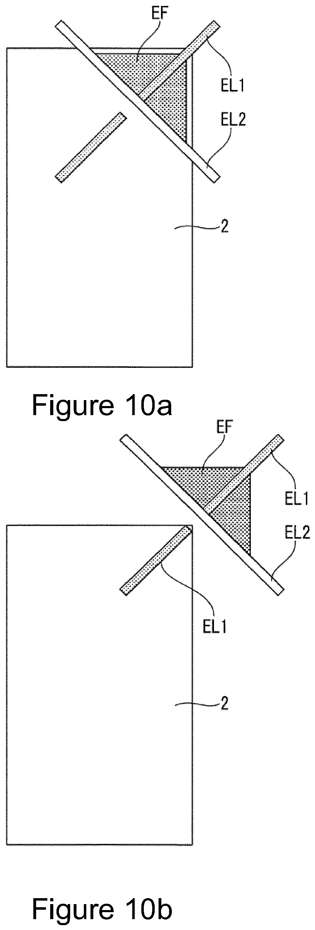

The operation of the first embodiment will be described using Figure 9 and Figure 10, with reference to Figure 1 to Figure 8.

When using a display device (a mobile communication terminal such as a mobile telephone or laptop computer) provided with the touch panel 1 according to the first embodiment, a user touches the touch panel 1 with a fingertip or the like, targeting the position (coordinate) of an icon or the like displayed on the display unit (screen).

Then, in the touch panel 1 touched by the fingertip or the like, a change occurs in the respective electrostatic capacitances between one first conductor wire 14 and a plurality of second conductor wires 24, and in this way the touch position (coordinate) of the fingertip or the like on the operating surface of the touch panel 1 is detected on a node by node basis.

Here, as discussed hereinabove, in the touch panel 1 in the first embodiment, the amount of displacement DQ through which the actual vertices CP are displaced from the virtual vertices VP is at least equal to 2% and less than 25% of the pitch WP.

The amount of displacement DQ of the actual vertices CP, which are the vertices formed by the two conductor wires, from the virtual vertices VP, which are the parts corresponding to the vertices of the virtual quadrilaterals, can thus be set to an appropriate value.

In addition, in the touch panel 1 in the first embodiment, in the first electrically conductive layer 10 and the second electrically conductive layer 20 respectively, the parts where the conductor wires intersect constitute less than 10% of the parts corresponding to all the vertices of the virtual quadrilaterals in the reference pattern.

As a result, in the first electrically conductive layer 10 and the second electrically conductive layer 20 respectively, it is possible to reduce the locations in which a large thickening is generated compared with a case in which the parts where the conductor wires intersect constitute 10% or more of the parts corresponding to all the vertices of the virtual quadrilaterals VS.

In this way, it is possible to suppress the occurrence of moiré and graining in the touch panel 1 provided with the first electrically conductive layer 10 and the second electrically conductive layer 20, and a display device onto which the touch panel 1 has been stacked.

It should be noted that the reason why it is possible to reduce the locations in which a large thickening is generated is as follows.

As illustrated in Figure 9, with a configuration in which two conductor wires EL1, EL2 are connected in an intersecting state (connected by intersecting in a cross-shape), thickened parts EF are formed in the locations (four locations) in which the two conductor wires EL1, EL2 form angles.

If the thickened parts EF are formed in positions overlapping an opening portion (opening portion 2) of the liquid crystal display, for example, the opening ratio (transmittance) of the opening portion is reduced by the thickened parts EF, in a plan view, and visibility decreases.

In order to suppress this decrease in visibility, the two conductor wires EL1, EL2 must be moved from the state illustrated in Figure 9(a). However, with a configuration in which the two conductor wires EL1, EL2 are connected in an intersecting state, if the amount of movement of the two conductor wires EL1, EL2 is small, a portion of the thickened parts EF overlaps the opening portion 2, as illustrated in Figure 9(b).

In contrast, as illustrated in Figure 10, with a configuration in which the two conductor wires EL1, EL2 are connected without intersecting (connected with a trifurcate shape), the thickened parts EF are formed only in the locations (two locations) in which the two conductor wires EL1, EL2 form angles.

Then, if the two conductor wires EL1, EL2 are moved from the state illustrated in Figure 10(a) in order to suppress the decrease in visibility, the thickened parts EF do not overlap the opening portion 2, even if the amount of movement of the two conductor wires EL1, EL2 is small, as illustrated in Figure 10(b).

Further, with a configuration in which the two conductor wires EL1, EL2 are connected without intersecting (connected with an L shape), the thickened part EF is formed only in the location (one location) in which the two conductor wires EL1, EL2 form angles. The thickened part EF thus overlaps the opening portion 2 less than with a configuration in which the two conductor wires EL1, EL2 are connected with a trifurcate shape.

It should be noted that the amount of movement of the two conductor wires EL1, EL2 in Figure 9 and the amount of movement of the two conductor wires EL1, EL2 in Figure 10 are the same amount. Furthermore, the direction of movement of the two conductor wires EL1, EL2 in Figure 9 and the direction of movement of the two conductor wires EL1, EL2 in Figure 10 are the same direction. Further, the thickened parts EF are illustrated conceptually in Figure 9 and Figure 10. It should be noted that the first embodiment discussed hereinabove is one example of the present invention, the present invention is not limited to the first embodiment discussed hereinabove, and even with modes other than the first embodiment discussed hereinabove, various modifications are possible in accordance with the design and the like, provided that the modifications are within a range that does not deviate from the technical concepts pertaining to the present invention.

### Advantages of the first embodiment

With the touch panel 1 in the first embodiment, the advantages set forth below can be exhibited.
(1) In the first electrically conductive layer and the second electrically conductive layer respectively, the parts where the conductor wires intersect constitute less than 10% of the parts (virtual vertices VP) corresponding to all the vertices of the virtual quadrilaterals VS in the reference pattern. In addition, in a plan view, each vertex (actual vertex CP) formed by the two conductor wires is disposed in a position displaced by an amount of displacement at least equal to 2% and less than 25% of the length of the pitch WP, which is the length of one side of the virtual quadrilateral VS, from the part (virtual vertex VP) corresponding to the vertex of the virtual quadrilateral VS.
   The amount of displacement DQ of the actual vertices CP, which are the vertices formed by the two conductor wires, from the virtual vertices VP, which are the parts corresponding to the vertices of the virtual quadrilaterals, can thus be set to an appropriate value. In addition, in the first electrically conductive layer 10 and the second electrically conductive layer 20 respectively, it is possible to reduce the locations in which a large thickening is generated compared with a case in which the parts where the conductor wires intersect constitute 10% or more of the parts corresponding to all the vertices of the virtual quadrilaterals VS.
   As a result, it is possible to suppress the occurrence of moiré and graining in the touch panel 1 provided with the first electrically conductive layer 10 and the second electrically conductive layer 20.
(2) There are a plurality of detection regions corresponding to a plurality of coordinates, and in all the detection regions, the positions to which the vertices (actual vertices CP) formed by the two conductor wires are displaced from the parts (virtual vertices VP) corresponding to the vertices of the virtual quadrilaterals are the same.
(3) Straight-line parts of the first main electrode wires 14M and straight-line parts of the second main electrode wires 24M intersect in a plan view.
   As a result, the electrostatic capacitance between the first electrically conductive layer 10 and the second electrically conductive layer 20 can be increased, enabling resistance to noise to be enhanced.
(4) The main electrode wires or the sub-electrode wires intersect the dummy wires in a plan view. As a result, the electrostatic capacitance between the first electrically conductive layer 10 and the second electrically conductive layer 20 can be increased, enabling resistance to noise to be enhanced.
(5) Straight-line parts of the first sub-electrode wires 14S and straight-line parts of the second sub-electrode wires 24S intersect in a plan view.
   As a result, the electrostatic capacitance between the first electrically conductive layer 10 and the second electrically conductive layer 20 can be increased, enabling resistance to noise to be enhanced.

### Modified examples

(1) In the first embodiment, the configuration is such that, in a plan view, the actual vertices CP are disposed in positions displaced from the virtual vertices VP by an amount of displacement at least equal to 2% and less than 25% of the length of the pitch WP, but the configuration is not limited thereto. That is, the configuration may be such that, in a plan view, the actual vertices CP are disposed in positions displaced by an amount of displacement at least equal to 1% and less than 50% of the length of the pitch WP.
   Even in this case, it is possible to suppress the occurrence of moiré without causing graining to occur in the touch panel 1 provided with the first electrically conductive layer 10 and the second electrically conductive layer 20.
(2) In the first embodiment, the configuration is such that the positions to which the actual vertices CP are displaced from the virtual vertices VP are the same in all the detection regions, but the configuration is not limited thereto.
   That is, the configuration may be such that the positions to which the actual vertices CP are displaced from the virtual vertices VP are mutually different in at least two detection regions. Even in this case, it is possible to suppress the occurrence of moiré without causing graining to occur in the touch panel 1 provided with the first electrically conductive layer 10 and the second electrically conductive layer 20.
(3) In the first embodiment, the number of actual vertices CP disposed in positions displaced from the virtual vertices VP is set to the same number as all the actual vertices CP existing in the detection region, but the configuration is not limited thereto.
   That is, it is also possible for some of the actual vertices CP to be fixed without being displaced from the vertices of the virtual quadrilaterals VS in the reference pattern. Therefore, the number of actual vertices CP disposed in positions displaced from the virtual vertices VP may be set, for example, to 50% of all the actual vertices CP existing in the detection region.
   In this case, by fixing vertices defining boundaries of the electrodes (boundaries of nodes, boundaries of dummy electrodes, or the like), from among the actual vertices CP, for example, without displacing the same from the vertices of the virtual quadrilaterals VS, disruption of the boundaries of the electrodes can be prevented, and a deterioration in the positional accuracy thereof can be suitably suppressed. Further, design requirements received from an assembly side can be accurately accommodated.
(4) In the first embodiment, the configuration is such that the first electrically conductive layer 10 forms the sensing layer of the touch panel 1, and the second electrically conductive layer 20 forms the drive layer of the touch panel 1, but the configuration is not limited thereto.
   That is, the configuration may be such that the first electrically conductive layer 10 forms the drive layer of the touch panel 1, and the second electrically conductive layer 20 forms the sensing layer of the touch panel 1.
(5) In the first embodiment, the line width of the first conductor wires 14 is set within a range of not less than 1 [µm] and not more than 7 [µm], but the line width is not limited thereto, and the line width of the first conductor wires 14 may be set within a range of not less than 1 [µm] and not more than 10 [µm]. The same applies to the line width of the second conductor wires 24.
(6) In the first embodiment, the configuration is such that the first conductor wires 14 are disposed on one surface 30a of the base material 30, and the second conductor wires 24 are disposed on the other surface 30b of the base material 30, but the configuration is not limited thereto.
   That is, the configuration may be such that two base materials are stacked on one another, the first conductor wires 14 are provided on an exposed surface of one base material, and the second electrically conductive layer 20 is provided on a surface on one side of the other base material.

### Exemplary embodiments

A touch panel in an exemplary embodiment 1 and a touch panel in a comparative example 1 will be described using the exemplary embodiments set forth below, with reference to the first embodiment.

### Exemplary embodiment 1

The touch panel in exemplary embodiment 1 is a touch panel in which, in the first electrically conductive layer and the second electrically conductive layer respectively, the parts where the conductor wires intersect constitute less than 10% of the parts corresponding to all the vertices of the virtual quadrilaterals.

### Comparative example 1

The touch panel in comparative example 1 is a touch panel in which, in the first electrically conductive layer and the second electrically conductive layer respectively, the parts where the conductor wires intersect constitute 10% or more of the parts corresponding to all the vertices of the virtual quadrilaterals.

### Comparisons of effects of suppressing moiré and effects of suppressing graining

The amounts of displacement of the actual vertices CP from the virtual vertices VP in a plan view were varied within a range of at least 1% and less than 50% of the length (100%) of the pitch WP, in the touch panel in exemplary embodiment 1 and the touch panel in comparative example 1. The effects of suppressing moiré and the effects of suppressing graining in the touch panel were each compared for the touch panel in exemplary embodiment 1 and the touch panel in comparative example 1. The comparison results are shown in Table 1.

**Table 1**

| | Suppression of moiré | Occurrence of graining |
|---|---|---|
| Embodiment 1 | 2% or more | 25% or more |
| Comparative example 1 | 30% or more | 15% or more |

### Comparison results

As shown in Table 1, with the touch panel in exemplary embodiment 1, it was confirmed that moiré was suppressed when the amount of displacement of the actual vertices was at least 2% of the pitch. In addition, it was confirmed that graining occurred when the amount of displacement of the actual vertices was at least equal to 25% of the pitch.

Meanwhile, with the touch panel in comparative example 1, it was confirmed that moiré was suppressed when the amount of displacement of the actual vertices was at least 30% of the pitch. In addition, it was confirmed that graining occurred when the amount of displacement of the actual vertices was at least equal to 15% of the pitch.

It was therefore confirmed that with the touch panel in exemplary embodiment 1, the effect of suppressing the occurrence of moiré could be obtained without causing graining to occur, if the amount of displacement of the actual vertices was at least equal to 2% and less than 25% of the pitch.

Further, with the touch panel in comparative example 1, it was confirmed that graining occurs if the amount of displacement of the actual vertices was at least 15% of the pitch. Furthermore, with the touch panel in comparative example 1, it was confirmed that the effect of suppressing moiré could be obtained if the amount of displacement of the actual vertices was at least 30% of the pitch.

From the above, since the proportion of the parts where the conductor wires intersect is greater in the touch panel in comparative example 1 than in the touch panel in exemplary embodiment 1, thickening of the points of intersection increases, and the amount of displacement of the actual vertices must be increased in order to obtain the effect of suppressing moiré. However, the problem that graining occurs arises if the amount of displacement of the actual vertices is increased excessively.

In contrast, since the proportion of the parts where the conductor wires intersect is less in the touch panel in exemplary embodiment 1 than in the touch panel in comparative example 1, and thickening of the points of intersection is small, the effect of suppressing moiré can be obtained even if the amount of displacement of the actual vertices is small. It is thus possible to obtain the effect of suppressing moiré and to suppress the occurrence of graining even if the amount of displacement of the actual vertices is restricted.

### Key to Symbols

- 1: Touch panel
- 2: Opening portion
- 10: First electrically conductive layer
- 14: First conductor wire
- 14M: First main electrode wire
- 14S: First sub-electrode wire
- 14D: First dummy wire
- 16a: First acute angle portion
- 16b: First obtuse angle portion
- 18: First main electrode wire group
- 20: Second electrically conductive layer
- 24: Second conductor wire
- 24M: Second main electrode wire
- 24S: Second sub-electrode wire
- 24D: Second dummy wire
- 26a: Second acute angle
- 26b: Second obtuse angle
- 28: Second main electrode wire group
- 30: Base material
- VS: Virtual quadrilateral
- CP: Actual vertex
- VP: Virtual vertex
- DQ: Amount of displacement through which actual vertex CP is displaced from virtual vertex VP
- CE: Machined region
- WP: Pitch
- STa: One straight-line part set to length three times pitch WP, from among straight-line parts of first conductor wires 14
- STb: One straight-line part set to length three times pitch WP, from among straight-line parts of second conductor wires 24
- EF: Thickened part
- EL1: Electrically conductive layer
- EL2: Electrically conductive layer

## Claims

1. Touch panel provided with a first electrically conductive layer including a plurality of conductor wires, and a second electrically conductive layer including a plurality of conductor wires, **characterized in that:**
in a plan view in a state in which the first electrically conductive layer and the second electrically conductive layer are stacked on one another, a pattern of continuously arranged virtual quadrilaterals, which are virtual quadrilaterals having the same shape, formed by the conductor wires included in the first electrically conductive layer and the conductor wires included in the second electrically conductive layer, is defined as a reference pattern;
in the first electrically conductive layer and the second electrically conductive layer respectively, the parts where the conductor wires intersect constitute less than 10% of the parts corresponding to all the vertices of the virtual quadrilaterals in the reference pattern; and
in a plan view, each vertex formed by the two conductor wires is disposed in a position displaced by an amount of displacement at least equal to 1% and less than 50% of the length of a pitch, which is the length of one side of the virtual quadrilateral, from the part corresponding to the vertex of the virtual quadrilateral in the reference pattern.

2. Touch panel according to Claim 1, **characterized in that** the amount of displacement is at least equal to 2% and less than 25% of the pitch.

3. Touch panel according to Claim 1 or Claim 2, **characterized by** including a plurality of detection regions corresponding to a plurality of coordinates, and
in all the detection regions, the positions to which the vertices formed by the two conductor wires are displaced from the parts corresponding to the vertices of the virtual quadrilaterals are the same.

4. Touch panel according to Claim 1 or Claim 2, **characterized by** including a plurality of detection regions corresponding to a plurality of coordinates, and
in at least two of the detection regions, the positions to which the vertices formed by the two conductor wires are displaced from the parts corresponding to the vertices of the virtual quadrilaterals are mutually different.

5. Display device **characterized in that** a touch panel as claimed in any one of Claim 1 to Claim 4 is stacked thereon.
